# EUROPEAN PATENT APPLICATION

(11) **EP 4 760 522 A1**
(43) Date of publication of application: **17.06.2026**
(21) Application number: 25221793.0
(22) Date of filing: 09.12.2025
(51) Int. Cl.: G06F 16/22

(54) **MANAGEMENT OF PHYSICAL METADATA IN DATABASES**

(30) Priority: 13.12.2024 US 202463733487 P
(71) Applicant: Google LLC, Mountain View, CA 94043 (US)
(72) Inventor: Agababov, Victor Sergeyevich, Mountain View, California 94043 (US); Johnson, Anoop Kochummen, Mountain View, California 94043 (US); Hottelier, Thibaud, Mountain View, California 94043 (US); Udaya Shankara, Shashank Kaushik, Mountain View, California 94043 (US)
(74) Representative: Betten & Resch

(57) **Abstract**

In accordance with aspects of the disclosure, an OLAP database is used to store a plurality of tables that are each associated with a particular client or tenant and which are each configured in accordance with a table-specific schema of metadata. A catalog service can be configured to allow for efficient read and write operations in connection with the tables stored within the OLAP database.

## Description

### CROSS-REFERENCE TO RELATED APPLICATIONS

The present application claims the benefit of the filing date of U.S. Provisional Patent Application No. 63/733,487 filed December 13, 2024, the disclosure of which is hereby incorporated herein by reference.

### BACKGROUND

Data files within large databases are often managed by assigning the data to within partitions a database index. The metadata for partitions can be used to locate the data files within the database. However, current systems do not index the metadata in a manner that allows for efficient access to the metadata in response to queries seeking information regarding the data files or the underlying metadata.

### BRIEF SUMMARY

The present disclosure relates to systems and methods for managing metadata for data files. Tables are used to associate data files, and metadata for those data files, with particular data partitions. The tables disclosed herein can be configured to allow for efficient management and access to information contained within the data files. For example, in connection with processing a query for information that is contained in one or more data files, a query engine will need to identify which data files to be read. The partitions that are represented within a table serve as logical groups of data files, and the tables are used to efficiently identify partitions that are relevant to a particular query.

In accordance with aspects of the disclosure, an online analytical processing (OLAP) database is used to store a plurality of tables that are each associated with a particular client or tenant and which are each configured in accordance with a table-specific schema of metadata. The use of tenant-specific tables within OLAP databases allows for greater scalability over alternative databases, as well as faster read and write operations. Each entry within the tables may have a particular number of primary keys associated with that entry, with each partition key representing metadata for the partition. In accordance with aspects of the disclosure, a catalog service may be configured to enforce uniqueness of partitions within a table, even though the OLAP database may not be itself configured to enforce primary keys within the table. The catalog service may be configured to allow for efficient read and write operations in connection with the tables stored within the OLAP database.

In accordance with aspects of the disclosure, a system for metadata management may include: one or more computing devices configured to access an online analytical processing (OLAP) database containing a plurality of tables having entries that correspond to metadata for partitions associated with a plurality of data files, wherein each table is associated with a tenant and is configured to have one or more partition keys for each partition represented within the table, wherein the partition keys are arranged within each table in accordance with a table-specific schema. The one or more computing devices that may be configured to: receive a request for metadata information, wherein the request is associated with a particular tenant and contains one or more filtering parameters; access a selected table from the OLAP database that is associated with the particular tenant; identify the entries within the selected table that correspond to the one or more filtering parameters; read the entries that have been identified; and transmit a response based on the entries read from the table.

In accordance with other aspects of the disclosure, a first table within the OLAP database may be associated with a first tenant and may contain a first number of partition keys for each partition, and a second table within the OLAP database is associated with a second tenant and contains a different number of partition keys for each partition than the first table.

In accordance with still another aspect of the disclosure, the metadata for each partition has different types of native formatting and the partition keys for each entry are values that correspond to the native format.

In accordance with other aspects of the disclosure, the one or more computing devices may be further configured to maintain uniqueness of partition key values for entries within each table.

In accordance with yet other aspects of the disclosure, the one or more computing devices may be further configured to: receive metadata that is to be added to a first table from the plurality of tables; perform a merge operation for the received metadata with the entries of the first table, wherein the received metadata is batched for each partition in accordance with the table-specific schema; and if the merge operation does not result in a match between a row of the first table and the received metadata, the received metadata is inserted into the first table as a new entry. In addition, the merge operation may include generating a SQL MERGE statement.

In accordance with still other aspects of the disclosure, the one or more computing devices may be further configured to transmit an error response if the merge operation results in a match between a row of the first table and the received metadata.

In accordance with other aspects of the disclosure, the one or more computing devices may be further configured to: receive metadata for a plurality of partitions that are to be added to a first table from the plurality of tables; generate a temporary table having a table-specific schema that is the same as the table-specific schema of the first table; write the received metadata into the temporary table in accordance with the table-specific schema; perform a merge operation between the temporary table and the first table; and if the merge operation does not result in a match between a row of the temporary table and any row of the first table, the row of the temporary table is inserted into the first table.

In accordance with still other aspects of the disclosure, the one or more computing devices may be further configured to: receive a first set of metadata for a first set of partitions that are to be added to a first table from the plurality of tables and a second set of metadata for a second set of partitions that are to be added to a second table from the plurality of tables; generate a first temporary table having a table-specific schema that is the same as the table-specific schema of the first table and a second temporary table having a table-specific schema that is the same as the table-specific schema of the second table; write the first set of metadata into the first temporary table in accordance with the table-specific schema of the first table and the second set of metadata into the second temporary table in accordance with the table-specific schema of the second table; and perform a merge operation between the first temporary table and the first table and a merge operation between the second temporary table and the second table. In addition, the first set of metadata and the second set of metadata may be processed in parallel.

In accordance with other aspects of the disclosure, the online analytical processing (OLAP) database may contain a primary region and a secondary region, and the metadata for the partitions associated with the plurality of data files may be redundantly stored within the primary region and the secondary region, and wherein one or more computing devices are configured to access the selected table from the OLAP database within the secondary region, when the primary region is unavailable.

In accordance with yet other aspects of the disclosure, a method for metadata management may include: receiving, by one or more processors, a request for metadata information, wherein the request contains one or more filtering parameters; accessing, by the one or more processors, a selected table from a plurality of tables within an online analytical processing (OLAP) database, wherein the plurality of tables have entries that correspond to metadata for partitions associated with a plurality of data files, wherein each table is configured to have one or more partition keys for each partition represented within the table, and wherein the partition keys are arranged within each table in accordance with a table-specific schema; identifying, by the one or more processors, the entries within the selected table that correspond to the one or more filtering parameters; reading, by the one or more processors, the entries that have been identified; and transmitting, by the one or more processors, a response based on the entries read from the table.

In accordance with other aspects of the disclosure, a selected table within the OLAP database may be associated with a first tenant and contain a first number partition keys for each partition, and a second table within the OLAP database may be associated with a second tenant and contain a different number of partition keys for each partition than the first table.

In accordance with still other aspects of the disclosure, the metadata for each partition may have different types of native formatting and the partition keys for each entry may be values that correspond to the native format.

In accordance with yet other aspects of the disclosure, the method may include altering, by the one or more processors, a first table from the plurality of tables in a manner that will maintain uniqueness of partition key values for entries within the first table.

In accordance with yet other aspects of the disclosure, the method may include: receiving, by the one or more processors, metadata that is to be added to a first table from the plurality of tables; performing, by the one or more processors, a merge operation for the received metadata with the entries of the first table, wherein the received metadata is batched for each partition in accordance with the table-specific schema; and if the merge operation does not result in a match between a row of the first table and the received metadata, inserting the received metadata into the first table as a new entry. In addition, the merge operation may include generating a SQL MERGE statement.

In accordance with yet other aspects of the disclosure, the method may include transmitting, by the one or more processors, an error response if the merge operation results in a match between a row of the first table and the received metadata.

In accordance with yet other aspects of the disclosure, the method may include: receiving, by the one or more processors, metadata for a plurality of partitions that are to be added to a first table from the plurality of tables; generating, by the one or more processors, a temporary table having a table-specific schema that is the same as the table-specific schema of the first table; writing, by the one or more processors, the received metadata into the temporary table in accordance with the table-specific schema; performing, by the one or more processors, a merge operation between the temporary table and the first table; and if the merge operation does not result in a match between a row of the temporary table and any row of the first table, inserting, by the one or more processors, the row of the temporary table into the first table.

In accordance with yet other aspects of the disclosure, the method may include: receiving, by the one or more processors, a first set of metadata for a first set of partitions that are to be added to a first table from the plurality of tables and a second set of metadata for a second set of partitions that are to be added to a second table from the plurality of tables; generating, by the one or more processors, a first temporary table having a table-specific schema that is the same as the table-specific schema of the first table and a second temporary table having a table-specific schema that is the same as the table-specific schema of the second table; writing, by the one or more processors, the first set of metadata into the first temporary table in accordance with the table-specific schema of the first table and the second set of metadata into the second temporary table in accordance with the table-specific schema of the second table; and performing, by the one or more processors, a merge operation between the first temporary table and the first table and a merge operation between the second temporary table and the second table. In addition, the first set of metadata and the second set of metadata may be processed in parallel.

### BRIEF DESCRIPTION OF THE DRAWINGS

Figure 1 is a block diagram of a system for managing metadata within an OLAP database in accordance with aspects of the disclosure.
Figure 2 is a block diagram of metadata tables in accordance with aspects of the disclosure.
Figure 3 is a block diagram of a system configured to perform high throughput metadata ingestion into an OLAP database.

### DETAILED DESCRIPTION

The technology relates to systems and methods for efficiently managing metadata within a database. For example, large amounts of data may be stored within one or more databases. In order to access and otherwise manage this stored data, the data may be divided into partitions, and a catalog may be used to manage the physical metadata relating to the partitions of data. In accordance with aspects of the disclosure, an OLAP database is used to store metadata tables that are each associated with a particular client or tenant and which are each configured in accordance with a table-specific schema of metadata. The use of tenant-specific tables within OLAP databases allows for greater scalability over alternative databases, as well as faster read and write operations. Each entry within the tables may have a particular number of primary keys associated with that entry, with each partition key representing metadata for the partition. In accordance with aspects of the disclosure, a catalog service may be configured to enforce uniqueness of partitions within a table, even though the OLAP database may not be itself configured to enforce primary keys within the table.

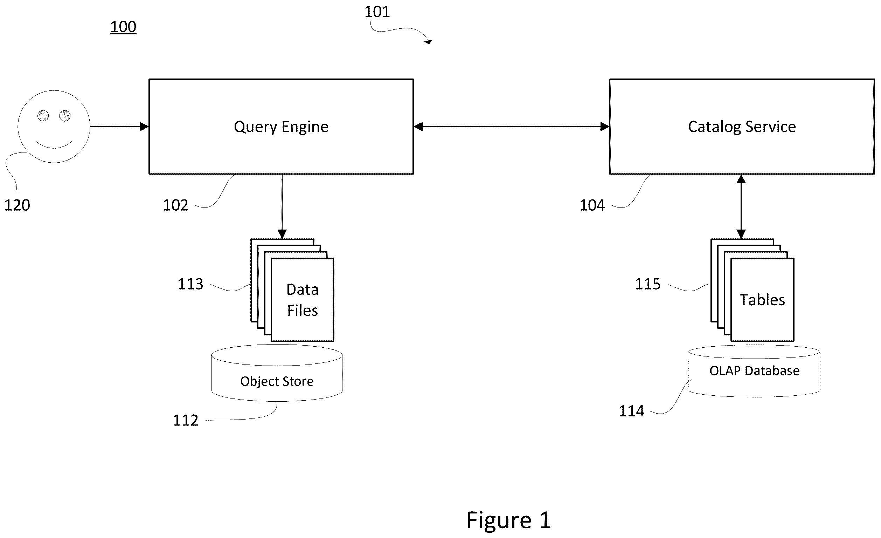

Figure 1 is a block diagram 100 of a system 101, which includes a query engine 102, catalog service 104, data files 113 stored in one or more object stores 112, and tables 115 stored within an OLAP database 114. The data files 113 within databases 112 may be divided into partitions, with each partition having an entry within a table 115. Query engine 102 may be a set of servers that are configured to receive queries from clients 120. A query will typically involve accessing files 113 within one or more object stores 112 so as to perform either read or write operations within the one or more object stores 112.

As part of the processing queries from clients 120, query engine 102 can send requests to catalog service 104, which is configured to access and maintain tables 115 that contain metadata associated with data files 113. Catalog service 104 may take the form of one or more computing devices that are able to efficiently access OLAP database 114 in response to requests from query engine 102. Catalog service 104 can then return a response to query engine 102 based on information that has been accessed within OLAP database 114.

Catalog service 104 can improve the efficiency with which data files 113 are accessed and maintained with regard to metadata for particular partitions of data. For example, client 120 may make a query for all data files 113 that are associated with a particular date and a particular country. Based on this, query engine 102 can submit a request to catalog service 104 for all data partitions that are associated with the particular date and country identified within the query. Catalog service 104 is configured to access tables 115 within OLAP database 114 to identify the metadata for any partition that matches the identified date and country. Catalog service 104 may then respond to query engine 102 with information from tables 115 for any partition that matches the identified date and country.

In accordance with aspects of the disclosure, the tables 115 are generated and maintained within an OLAP database 114 in a manner that allows for a more efficient query response than known systems, which are optimized for a different set of operations than those performed by catalog service 104. For example, many databases, including many online transaction processing (OLTP) databases are optimized for highly concurrent transactions between both read and write operations, and become inefficient when used in connection with indexing data partitions. For example, catalog service 104 of system 101 will often perform read operations at a much higher frequency than write operations, and when write operations occur, they will often take the form of high volume insertions, such as when there are large scale migrations, repair, or recreation of data files 113 within object stores 112. The OLAP database 114 and tables 113 disclosed herein are configured to allow these operations by the catalog service 104 to be performed more efficiently.

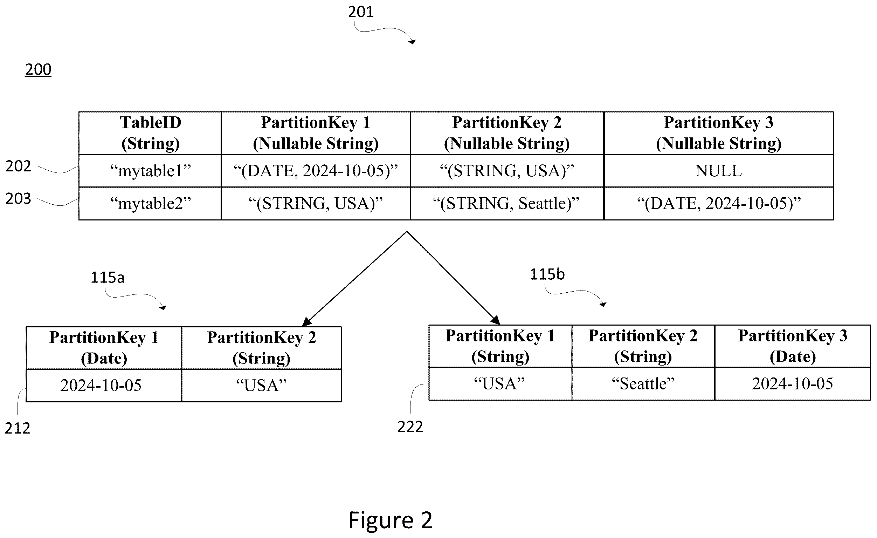

For example, in accordance with aspects of the disclosure, tables 115 can be configured so that each table is specific to a particular client or tenant and has a table-specific schema. In addition, tables 115 are configured so that each entry within the table is based on the native format of the metadata for that entry. Figure 2 is a block diagram 200 of tables 201, 115a, and 115b. Table 201 is a standard multi-tenant table in which all partitions are presented using a generic schema, while tables 115a and 115b are tenant-specific tables in which each partition is presented in accordance with a table-specific schema.

Each table entry can contain a set of metadata associated with a partition within a database. For example, the metadata for a partition may include storage location data that identifies where the file or files for that partition are stored. The metadata may also include information relating to particular values within the files of the partition as well as information regarding how the data is partitioned. For example, metadata for a partition may include dates, locations, individuals associated with the data, as well as maximum and minimum values for some or all columns within a partition. The metadata may also include information regarding directories in which the files are stored.

Table 201 contains two rows 202 and 203 that represent two partition entries that are respectively labeled "mytable1" and "mytable2". Entries 202 and 203 are associated with different tenants that use different schemas for their partitions. In particular, the tenant for "mytable1" uses a schema of the format <date:datetime, country:string>, meaning that the first entry represents a date, while the second entry represents a country. In contrast, the tenant for "mytable2" uses a schema of the format <country:string, city:string, date:datetime>, meaning that the first entry represents a country, the second entry represents a city, and the third entry represents a date. However, the partitions for both "mytable1" and "mytable2" are presented within table 201 under a generic schema in which the entries within each column merely represent a generic partition key that is converted from particular values to a string. Accordingly, for row 202, the entry is designated as NULL, given that the partition associated with row 202 only has two entries.

Given that table 201 stores all of the partitions in accordance with a generic schema of strings, an insertion into table 201 will require the metadata values for each partition to be converted to strings and for any query the strings will need to be converted back to the original type in order to apply a proper query filter. For example, sorting based on strings will produce different results than a sorting that is based on the underlying values of the metadata. In addition, any query against the physical metadata of table 201 will require performing a query across the entire table. Table 201 is also not configured to support customer-managed encryption keys ("CMEK"), given that all the partitions are placed within a single multi-tenant table and all rows within the table would share the same key.

Tables 115a and 115b represent the same partitions as table 201. However, tables 115a and 115b are each associated with a particular tenant and are configured to have a table-specific schema in accordance with the metadata schema that is used by each tenant. Thus, the partition identified in row 212 of table 115a contains two columns corresponding to the metadata values for the date and country of that partition. Likewise, the partition for row 222 of table 115b contains three columns corresponding to the metadata values for the country, city, and date of that partition. Given the schema-specific configuration of each table 115a and 115b, the values within tables 115a and 115b may be presented in the native format of each metadata entry.

Given the tenant-specific and schema-specific configuration of tables 115a and 115b, clustering operations can be performed on the partition keys within tables 115a and 115b to improve query performance, and individual user-specific encryption keys may be used for each table 115a and 115b. The columnar storage format for the physical metadata also allows the disclosed system to implement a more efficient filter push-down, while also allowing for a smaller storage footprint and potentially allowing for improved compression of the metadata. Permissions and controls may also be applied individually to table 115a and 115b based on tenant-specific requirements, while the multi-tenant table 201 requires all entries to have the same permissions and controls.

Further partitions may then be added to tables 115a and 115b in accordance with each table-specific schema. In addition, other tables may be generated for other tenants or for other metadata schema, including schema that contains more than three columns for each partition. The physical metadata tables may also be clustered based on a particular number of keys within the table. For example, each metadata table may be clustered based on the first four keys of the schema-specific table, which can improve data locality for the table and increase the speed of data filtering and data retrieval within the table.

Returning to Figure 1, catalog service 104 may also be configured to optimize the metadata tables 115, such as by coalescing and re-clustering the metadata tables in a manner that allows for optimal size and shape of the underlying files. In addition, while standard OLAP databases do not support enforced primary keys, the catalog service 104 and OLAP database 114 can be configured so that individual metadata rows within tables 115 are unique.

For example, in maintaining uniqueness of partition keys within tables 115, the catalog service 104 can be configured to perform ingestion operations in which rows metadata of are added to a table 115 only if the rows would be unique within the table 115. For example, catalog service 104 can generate a batch of the physical metadata information rows that are to be incorporated into tables 115. The catalog service 104 can validate and process this batched ingestion request by building a SQL MERGE statement for the metadata rows. This MERGE statement may be executed against an existing table 115 so as to determine whether a matching row is already present within the existing table 115. If the MERGE results in a NOT MATCHED condition, the metadata row may be inserted into the existing table 115. However, the MATCHED condition can result in a failure for the query, and the query execution may halt, abort the query, and return the system to an initial state. If no error occurs during the ingestion process, the transaction is completed and an indication of success may be transmitted from catalog service 104 to client 120 via query engine 102. Otherwise, an indication of ingestion error may be returned to client 120. The execution of ingestion operations can be configured so as to ensure that for a given table the execution is serialized, so as to prevent potential conflicts that could result in race conditions or retries.

OLAP database 114 can be configured to make use of its very high throughput egress mechanisms in connection with the retrieval of the physical metadata stored in tables 115. A client 120 may submit a query to query engine 102 that identifies particular types of data for which the client 120 is interested. For example, client 120 may submit a query that requests information from all data files that are associated with a particular range of date, are associated with a particular geographic location, or are associated with particular account numbers or names. This query can be passed from query engine 102 to catalog engine 104 whereby the query is converted to one or more filters, which are used to retrieve the physical metadata within tables 115.

For example, if a query requests information from data files that are within a particular range of dates, catalog service 104 can identify a tenant-specific table associated with the requesting client and apply the date range as a filter to prune the unwanted rows from tables 115. As described herein, tables 115 are schema-specific tables so that the date metadata will be located within a particular column of each table 115. In addition, this date column will contain entries that are in the native date format, allowing the entries to be efficiently sorted and filtered. Upon applying the filter, the relevant rows of a table 115 can be identified and a high throughput reading stream can be created to read the relevant rows from table 115 from the OLAP database 114. Catalog service 104 may be configured to perform this high throughput read operation in connection with a plurality of parallel streams for a plurality of tables 115. In addition, the retrieved rows of tables 115 can then be transcoded and streamed to query engine 102 in accordance with an external interface format, and the data associated with the retrieved rows of tables 115 can then be presented to client 120.

As the number of rows within tables 115 grows larger, the efficiency of the read operations for tables 115 increases relative to the read operations that would be required for table 201 shown in Figure 2. Given that standard table 201 is not configured to a specific schema of metadata, standard table 201 will require a read operation to be performed on the entirety of the table, so as to identify all relevant rows relating to the query. However, as described herein, tables 115 can be filtered in accordance with a table-specific schema, thereby allowing non-relevant rows to be filtered out prior to performing the remaining read operations. In addition, a response to a query will often require the entries of table 201 to be converted from strings to a native format, which generates further inefficiencies relative to the filtered read operations described for tables 115.

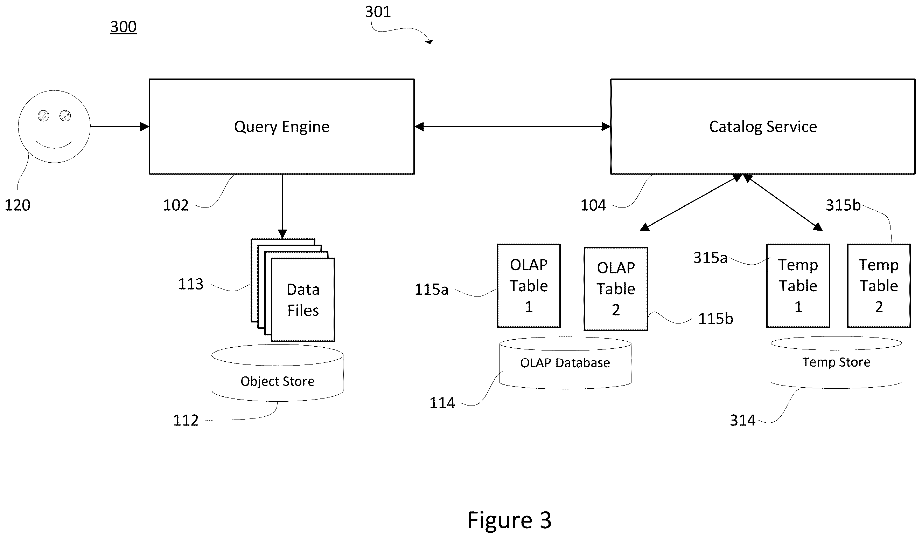

Turning to block diagram 300 of Figure 3, a system 301 is shown in which catalog service 104 is configured to perform ingress operations in accordance with high throughput ingress mechanisms of OLAP database 114. In some instances, large-scale changes will be made to data files 113 that require a large-scale ingestion of metadata into tables 115. In accordance with aspects of the disclosure, catalog service 104 can receive a set of metadata from query engine 102 that is to be included within one or more tables 115. Catalog service 104 may identify the table 115a for which the received metadata is to be incorporated. The identification of table 115a may be based, at least in part, on tenant-specific data associated with the received metadata. To achieve a high throughput ingestion of the received metadata into table 115a, catalog service 104 may generate a temporary table 315a within a temporary store 314. The temporary store 314 can take the form of being within OLAP database 114. Table 115a and temporary table 315a will share the same metadata schema, so the columnal arrangement of partition keys within temporary table 315a will be configured to match the columnal arrangement of partition keys within table 115a.

The received metadata can be streamed or otherwise written into the temporary table 315a in accordance with the table's metadata schema, with each row within the table representing a different partition. Once temporary table 315a is complete, catalog service 104 can perform a merge operation between the temporary table 315a and table 115a. For example, catalog service 104 may generate a Standard SQL MERGE statement that will merge the entries of temporary table 315a with table 115a. In connection with this operation, it will be determined whether a row from temporary table 315a matches any row within table 115a. If the merge results in no match, then that row will be inserted into table 115a. However, if a row from temporary table 315a matches a row of table 115a, the request will result in a failed merge, and an error message may be transmitted by catalog service 104, indicating the one or more rows that resulted in the failed merger.

Queries against a particular table can be executed serially, so as to avoid conflicts and retries. However, multiple parallel streams can be implemented for ingestion of metadata into different tables. For example, catalog service 104 may receive two sets of metadata, a first set may be identified as being associated with table 115a, while the second set of metadata may be associated with table 115b. The catalog service 104 may be configured to process the first and second sets of metadata in parallel. For example, the first set of metadata may be placed into temporary table 315a, while the second set of metadata may be incorporated into table 315b. In accordance with aspects of the disclosure, temporary table 315a will be arranged in accordance with the same metadata schema as table 115a, while temporary table 315b will be arranged in accordance with the same metadata schema as table 115b. Given that tables 115a and 115b are tenant-specific and independent of one another, the merge operations between temporary table 315a and table 115a as well as between temporary table 315b and table 115b may then occur in parallel to one another.

In accordance with aspects of the disclosure, catalog service 104 may be used to provide redundancy of the metadata within system 101. For example, the system 101 may provide for end-to-end disaster recovery that allows for a client 120 to query a table 115 in a secondary region of OLAP database 114, when a primary region of the database fails. In this instance object stores 112 provide cross-region replication, so as to allow data files to be automatically replicated in the secondary region. The OLAP database 114 can provide cross-region replication, in which metadata of tables 115, including partitions within each table 115, are made available in the secondary region of the system. Accordingly, a query from a client 120 can be processed in the secondary region, if the primary region is temporarily inaccessible or if data has been lost within the primary region.

As discussed above, the current disclosure allows for more efficient processing of metadata than those that rely exclusively on multi-tenant lists of metadata within online transaction processing (OLTP) databases.

Aspects of this disclosure can be implemented in digital circuits, computer-readable storage media, as one or more computer programs, or a combination of one or more of the foregoing. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers or processors, causes the one or more computers or processors to perform the one or more operations.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system for metadata management comprising:
one or more computing devices configured to access an online analytical processing, OLAP, database containing a plurality of tables having entries that correspond to metadata for partitions associated with a plurality of data files, wherein each table is associated with a tenant and is configured to have one or more partition keys for each partition represented within the table, wherein the partition keys are arranged within each table in accordance with a table-specific schema, and wherein the one or more computing devices that are configured to:
receive a request for metadata information, wherein the request is associated with a particular tenant and contains one or more filtering parameters;
access a selected table from the OLAP database that is associated with the particular tenant;
identify the entries within the selected table that correspond to the one or more filtering parameters;
read the entries that have been identified; and
transmit a response based on the entries read from the table.

2. The system of claim 1, wherein a first table within the OLAP database is associated with a first tenant and contains a first number of partition keys for each partition, and a second table within the OLAP database is associated with a second tenant and contains a different number of partition keys for each partition than the first table; and/or
wherein the metadata for each partition has different types of native formatting and wherein the partition keys for each entry are values that correspond to the native format; and/or
wherein the one or more computing devices are further configured to maintain uniqueness of partition key values for entries within each table.

3. The system of claim 1 or claim 2, wherein the one or more computing devices are further configured to:
receive metadata that is to be added to a first table from the plurality of tables;
perform a merge operation for the received metadata with the entries of the first table,
wherein the received metadata is batched for each partition in accordance with the table-specific schema; and
if the merge operation does not result in a match between a row of the first table and
the received metadata, the received metadata is inserted into the first table as a new entry.

4. The system of claim 3, wherein the merge operation comprises generating a SQL MERGE statement; or
wherein the one or more computing devices are further configured to transmit an error response if the merge operation results in a match between a row of the first table and the received metadata.

5. The system of any one of claims 1 to 4, wherein the one or more computing devices are further configured to:
receive metadata for a plurality of partitions that are to be added to a first table from the plurality of tables;
generate a temporary table having a table-specific schema that is the same as the table-specific schema of the first table;
write the received metadata into the temporary table in accordance with the table-specific schema;
perform a merge operation between the temporary table and the first table; and
if the merge operation does not result in a match between a row of the temporary table and any row of the first table, the row of the temporary table is inserted into the first table.

6. The system of any one of claims 1 to 5, wherein the one or more computing devices are further configured to:
receive a first set of metadata for a first set of partitions that are to be added to a first table from the plurality of tables and a second set of metadata for a second set of partitions that are to be added to a second table from the plurality of tables;
generate a first temporary table having a table-specific schema that is the same as the table-specific schema of the first table and a second temporary table having a table-specific schema that is the same as the table-specific schema of the second table;
write the first set of metadata into the first temporary table in accordance with the table-specific schema of the first table and the second set of metadata into the second temporary table in accordance with the table-specific schema of the second table;
perform a merge operation between the first temporary table and the first table and a merge operation between the second temporary table and the second table.

7. The system of any one of claims 1 to 6, wherein the online analytical processing, OLAP, database contains a primary region and a secondary region, and the metadata for the partitions associated with the plurality of data files is redundantly stored within the primary region and the secondary region, and wherein one or more computing devices are configured to access the selected table from the OLAP database within the secondary region, when the primary region is unavailable.

8. A method for metadata management comprising:
receiving, by one or more processors, a request for metadata information, wherein the request contains one or more filtering parameters;
accessing, by the one or more processors, a selected table from a plurality of tables within an online analytical processing, OLAP, database, wherein the plurality of tables have entries that correspond to metadata for partitions associated with a plurality of data files, wherein each table is configured to have one or more partition keys for each partition represented within the table, and wherein the partition keys are arranged within each table in accordance with a table-specific schema;
identifying, by the one or more processors, the entries within the selected table that correspond to the one or more filtering parameters;
reading, by the one or more processors, the entries that have been identified; and
transmitting, by the one or more processors, a response based on the entries read from the table.

9. The method of claim 8, wherein a selected table within the OLAP database is associated with a first tenant and contains a first number partition keys for each partition, and a second table within the OLAP database is associated with a second tenant and contains a different number of partition keys for each partition than the first table; and/or
wherein the metadata for each partition has different types of native formatting and wherein the partition keys for each entry are values that correspond to the native format; and/or
further comprising altering, by the one or more processors, a first table from the plurality of tables in a manner that will maintain uniqueness of partition key values for entries within the first table.

10. The method of claim 8 or claim 9, further comprising:
receiving, by the one or more processors, metadata that is to be added to a first table from the plurality of tables;
performing, by the one or more processors, a merge operation for the received metadata with the entries of the first table, wherein the received metadata is batched for each partition in accordance with the table-specific schema; and
if the merge operation does not result in a match between a row of the first table and
the received metadata, inserting the received metadata into the first table as a new entry.

11. The method of claim 10, wherein the merge operation comprises generating a SQL MERGE statement; or
further comprising transmitting, by the one or more processors, an error response if the merge operation results in a match between a row of the first table and the received metadata.

12. The method of any one of claims 8 to 11, further comprising:
receiving, by the one or more processors, metadata for a plurality of partitions that are to be added to a first table from the plurality of tables;
generating, by the one or more processors, a temporary table having a table-specific schema that is the same as the table-specific schema of the first table;
writing, by the one or more processors, the received metadata into the temporary table in accordance with the table-specific schema;
performing, by the one or more processors, a merge operation between the temporary table and the first table; and
if the merge operation does not result in a match between a row of the temporary table and any row of the first table, inserting, by the one or more processors, the row of the temporary table into the first table.

13. The method of any one of claims 8 to 12, further comprising:
receiving, by the one or more processors, a first set of metadata for a first set of partitions that are to be added to a first table from the plurality of tables and a second set of metadata for a second set of partitions that are to be added to a second table from the plurality of tables;
generating, by the one or more processors, a first temporary table having a table-specific schema that is the same as the table-specific schema of the first table and a second temporary table having a table-specific schema that is the same as the table-specific schema of the second table;
writing, by the one or more processors, the first set of metadata into the first temporary table in accordance with the table-specific schema of the first table and the second set of metadata into the second temporary table in accordance with the table-specific schema of the second table; and
performing, by the one or more processors, a merge operation between the first temporary table and the first table and a merge operation between the second temporary table and the second table.

14. The method of claim 13, wherein the first set of metadata and the second set of metadata are processed in parallel.

15. A computer program comprising instructions that, when executed by one or more processors, cause the one or more processors to perform the method of any one of claims 8 to 14.
